# EUROPÄISCHE PATENTSCHRIFT

(11) **EP 3 233 541 B1**
(45) Veröffentlichungstag und Bekanntmachung des Hinweises auf die Patenterteilung: **17.10.2018**
(21) Anmeldenummer: 15795185.6
(22) Anmeldetag: 18.11.2015
(51) Int. Cl.: B60G 3/28, B60G 11/18, B60G 7/00, B60G 11/10

(54) **HINTERRADAUFHÄNGUNG MIT ALS SPURLENKER AUSGEBILDETER QUERBLATTFEDER**
REAR SUSPENSION WITH TRANSVERSE LEAF SPRING AS CONTROL LINK
SUSPENSION ARRIÈRE AVEC RESSORT À LAME TRANSVERSAL DONT LA LAME FAIT OFFICE DE BRAS DE SUSPENSION CONTROLANT LA PINCE

(30) Priorität: 15.12.2014 DE 102014225885
(43) Veröffentlichungstag der Anmeldung: 25.10.2017
(73) Patentinhaber: ZF Friedrichshafen AG, 88046 Friedrichshafen (DE)
(72) Erfinder: WALLGREN, Klaus, 85757 Karlsfeld (DE)
(86) Internationale Anmeldenummer: PCT/EP2015/076899
(87) Internationale Veröffentlichungsnummer: WO 2016/096293

(56) Entgegenhaltungen:
- WO-A1-2009/121353
- WO-A1-2013/075787
- DE-A1-102008 049 761
- DE-A1-102008 054 669
- DE-C1- 3 714 034
- DE-T2- 60 025 912
- FR-A1- 2 605 940
- JP-A- H04 252 712
- US-A1- 2002 000 703

## Beschreibung

Die vorliegende Erfindung betrifft eine Hinterradaufhängung für ein Kraftfahrzeug gemäß der im Oberbegriff des Patentanspruchs 1 näher definierten Art.

Aus der US 2002/0000703 A1 ist eine Hinterradaufhängung für ein Fahrzeug bekannt, die in einer oberen Lenkerebene einen Querlenker und in einer unteren Lenkerebene eine Spurstange sowie eine Querblattfeder aufweist. Die Querblattfeder übernimmt hierbei die Funktion eines Stabilisators, einer Feder und eines radführenden Querlenkers.

Die DE 10 2008 054 669 A1 offenbart eine Achse für ein Kraftfahrzeug mit einer Querblattfeder, wobei ein einem Rad zugewandtes Ende der Querblattfeder mit einem Lenker starr verbunden ist. Der Lenker ist im Wesentlichen in Längsrichtung des Kraftfahrzeuges ausgerichtet und über Lager mit einem Radträger verbunden.

Der DE 10 2008 049 761 A1 ist eine Einzelradaufhängung für ein Fahrzeugrad und eine damit ausgerüstete Radachse zu entnehmen, wobei eine Querblattfeder mittels einer Pendelstütze an einem Achslager gelagert ist. Das Achslager ist mit einer Radnabe verschraubt.

Die der Erfindung zu Grunde liegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Hinterradaufhängung für ein Kraftfahrzeug vorgeschlagen, die einen um eine Lenkachse schwenkbaren Radträger zum lenkbaren Aufnehmen eines Rades umfasst. Des Weiteren weist die Hinterradaufhängung einen radführenden Lenker auf. Dieser ist in einer in Bezug zur Fahrzeughochachse unteren Lenkerebene angeordnet. Des Weiteren ist dieser aufbauseitig gelenkig mit einem dafür vorgesehenen Aufbau verbindbar. Der radführende Lenker kann unmittelbar mit dem Aufbau gelenkig verbunden sein. Zusätzlich oder alternativ kann dieser aber auch mittelbar mit dem Aufbau gelenkig verbunden sein. Demnach kann der Lenker in zumindest einem seiner aufbauseitigen Gelenkpunkte an einem Hilfsrahmen oder Montagerahmen gelenkig verbunden sein. Der Hilfsrahmen bzw. Montagerahmen kann wiederum mit dem Aufbau verbunden sein. Radseitig ist der Lenker gelenkig mit dem Radträger verbunden. Ferner umfasst die Hinterradaufhängung einen in einer oberen Lenkerebene angeordneten radführenden Querlenker. Dieser ist aufbauseitig gelenkig mit dem dafür vorgesehenen Aufbau verbindbar. Analog zum Lenker kann auch der Querlenker entweder unmittelbar oder aber auch mittelbar am Aufbau angelenkt sein. Bei letzterem ist der Querlenker an seinem dem Radträger abgewandten Ende vorzugsweise in dem Hilfsrahmen bzw. Montagerahmen gelenkig gelagert. Der Hilfsrahmen bzw. Montagerahmen ist wiederum mit dem Aufbau lösbar verbindbar. Radseitig ist der Querlenker gelenkig mit dem Radträger verbunden. Die Hinterradaufhängung weist ferner eine Querblattfeder mit aufbauseitiger Zweipunktlagerung auf. Die Querblattfeder ist an ihrem dem Radträger zugewandten Ende in Bezug zur Fahrtrichtung hinter der Radmitte gelenkig mit dem Radträger verbunden.

Der in der oberen Lenkerebene angeordnete Querlenker ist in Fahrzeuglängsrichtung in Bezug zur Fahrtrichtung vor der Querblattfeder angeordnet. Des Weiteren ist die Querblattfeder in Fahrzeughochrichtung unterhalb des Querlenkers gelenkig mit dem Radträger verbunden. Die Querblattfeder ist somit in Fahrzeughochrichtung im Bereich zwischen der unteren und oberen Lenkerebene am Radträger angelenkt. Der Querlenker und die Querblattfeder sind somit derart zueinander angeordnet und mit dem Radträger gelenkig verbunden, dass die Querblattfeder zur passiven Lenkung des Rades - d. h. zur Steuerung des Eigenlenkverhaltens des Rades - über den Radhub als Spurlenker ausgebildet ist. Die Querblattfeder wirkt demnach als Spurlenker. Infolgedessen steuert die Querblattfeder beim Ein- und/oder Ausfedern des Rades dessen Verdrehung um die Lenkachse. Die Querblattfeder erzeugt demnach die gewünschte Vorspur des Rades über den Radhub. Sie steuert das Eigenlenkverhalten der Hinterradaufhängung.

In der vorliegenden Hinterradaufhängung übernimmt die Querblattfeder somit nicht nur die Aufgabe einer Federung und eines Stabilisators, sondern überdies hinaus auch noch zusätzlich als dritte Wirkung die Aufgabe eines für gewöhnlich notwendigen Spurlenkers. Die Querblattfeder vereint demnach drei wichtige Funktionen einer Hinterradaufhängung in einem einzigen Bauteil, nämlich die der Federung, des Stabilisators und des Spurlenkers. Hierdurch kann die Hinterradaufhängung sehr kompakt und bauraumsparend ausgebildet werden. Infolgedessen eignet sich diese optimal für eine angetriebene Hinterradachse, insbesondere mit konventioneller Antriebstechnik oder aber auch mit einem elektrischen Antrieb, vorzugsweise einem Radnabenmotor. Ferner kann die Hinterradaufhängung durch die Kombination dreier Funktionen in einem einzigen Bauteil, nämlich in der Querblattfeder, sehr leicht ausgebildet werden.

Dadurch, dass die Querblattfeder in Fahrzeughochrichtung im Vergleich zum Querlenker tiefer angeordnet ist, werden die Querkräfte zum Abstützen des Rades im Wesentlichen vom Querlenker aufgenommen. Hierdurch muss die Querblattfeder vorteilhafterweise ausschließlich die zum Einstellen und Halten der Spur auftretenden stark reduzierten Querkräfte aufnehmen. Ein weiterer Vorteil der unterhalb des Querlenkers angeordneten Querblattfeder besteht darin, dass oberhalb der Querblattfeder zusätzlicher Bauraum geschaffen wird. Hierdurch kann beispielsweise das Kofferraumladevolumen des Fahrzeugs erhöht werden. Ferner kann die Kinematik und Elastokinematik der Hinterradaufhängung durch eine vorstehend beschriebene relative Anordnung der Querblattfeder und des Querlenkers verbessert werden.

Vorteilhaft ist es, wenn die Querblattfeder in Fahrzeughochrichtung im Bereich, insbesondere auf Höhe, der Radmitte gelenkig mit dem Radträger verbunden ist. Hierdurch kann vorteilhafterweise im Bereich oberhalb der Radmitte zusätzliches Bauvolumen geschaffen werden, das für weitere Bauteile oder aber auch zur Vergrößerung des Kofferraumladevolumens genutzt werden kann. Des Weiteren können die auf die Querblattfeder einwirkenden Querkräfte reduziert werden, wenn die Querblattfeder in Bezug zum Querlenker hinter diesem und/oder in Fahrzeughochrichtung zwischen der oberen und unteren Lenkerebene angeordnet und/oder angelenkt ist. Demnach werden die Querkräfte zum Führen des Rades im Wesentlichen durch den in der unteren Lenkerebene angeordneten radführenden Lenker sowie durch den in der oberen Lenkerebene vor der Querblattfeder angeordneten Querlenker aufgenommen. Vorteilhafterweise kann die insbesondere aus einem Faserverbundwerkstoff hergestellte Querblattfeder für reduzierte Spurlenkerquerkräfte ausgelegt werden.
Des Weiteren ist es vorteilhaft, wenn der Lenker als Trapezlenker ausgebildet ist. Der Trapezlenker weist hierbei vorzugsweise sowohl aufbauseitig als auch radträgerseitig zwei voneinander in Fahrzeuglängsrichtung beabstandete Anlenkpunkte auf.

Erfindungsgemäß ist der Lenker radseitig gelenkig in einem ersten Verbindungsbereich, insbesondere über ein Kugelgelenk oder Kugelhülsengelenk, unmittelbar mit dem Radträger verbunden. Zusätzlich ist der Lenker in einem zweiten Verbindungsbereich mittelbar über einen Integrallenker mit dem Radträger verbunden. Im ersten Verbindungsbereich ist der Radträger somit mit dem radführenden Lenker derart verbunden, dass dieser ohne zusätzliche Lenkerabstützung im Wesentlichen frei schwenken bzw. rotieren könnte. Der davon in Fahrzeuglängsrichtung beabstandete Integrallenker, der im zweiten Verbindungsbereich den Lenker mittelbar mit dem Radträger gelenkig verbindet, verhindert jedoch eine unkontrollierte Rotation des Radträgers. Stattdessen führt der Integrallenker den Radträger derart, dass der Radträger kontrolliert um seine Lenkachse zu schwenken vermag. Infolgedessen ist der Radträger durch die über den Integrallenker ausgebildete mittelbare Gelenkverbindung im zweiten Verbindungsbereich und die über das Kugelgelenk ausgebildete unmittelbare Gelenkverbindung im davon in Fahrzeuglängsrichtung beabstandeten ersten Verbindungsbereich derart gelenkig mit dem radführenden Lenker verbunden, dass dieser zum einen gegenüber dem dafür vorgesehenen Aufbau und/oder Hilfsrahmen gelenkig ein- und ausfedern kann und zum anderen zum Ausführen einer Lenkbewegung um seine Lenkachse rotieren kann.
In einer vorteilhaften Weiterbildung der Erfindung ist der erste Verbindungsbereich in Bezug zur Fahrtrichtung im Bereich der Radmitte, vorzugsweise genau in der Radmitte, angeordnet. Des Weiteren kann es ebenso vorteilhaft sein, wenn der erste Verbindungsbereich in Bezug zur Fahrtrichtung vor der Radmitte angeordnet ist. Zusätzlich oder alternativ ist es ferner vorteilhaft, wenn der zweite Verbindungsbereich, in dem insbesondere der Integrallenker angelenkt ist, hinter dem ersten Verbindungsbereich und/oder der Radmitte angeordnet ist. Vorteilhafterweise kann somit vor der Radmitte Bauraum geschaffen werden, der für zusätzliche Fahrzeugbauteile, wie beispielsweise eine Bremsanlage und/oder eine Antriebseinheit, genutzt werden kann.

Auch ist es vorteilhaft, wenn der Querlenker in Fahrzeughochrichtung oberhalb der Radmitte angeordnet ist. Hierdurch können die in die obere Lenkerebene eingebrachten Querkräfte zum Führen des Rades im Wesentlichen ausschließlich in den Querlenker eingeleitet werden. Vorteilhafterweise ist die Querblattfeder, die in Bezug zum Querlenker in Fahrzeughochrichtung unterhalb von diesem angeordnet ist und/oder unterhalb von diesem am Radträger angelenkt ist, von diesen Querkräften im Wesentlichen weitestgehend entkoppelt. Die Querblattfeder muss somit ausschließlich die zum Lenken des Rades notwendigen Querkräfte aufnehmen.

Zusätzlich oder alternativ ist es ferner vorteilhaft, wenn der Querlenker in Fahrzeuglängsrichtung im Bereich der Radmitte, insbesondere in Bezug zur Fahrtrichtung vor der Radmitte, angeordnet ist und/oder im Bereich der Radmitte, insbesondere in Bezug zur Fahrtrichtung vor der Radmitte, gelenkig mit dem Radträger verbunden ist. Diesbezüglich ist es insbesondere vorteilhaft, wenn der Querlenker in Fahrzeuglängsrichtung im Wesentlichen genau in der Radmitte angeordnet ist. Zusätzlich oder alternativ ist es ferner vorteilhaft, wenn der Querlenker in Fahrzeuglängsrichtung in Bezug zur Fahrtrichtung zumindest im Bereich des ersten Verbindungsbereiches gelenkig mit dem Radträger verbunden ist. Der erste Verbindungsbereich und der Anlenkpunkt des Querlenkers am Radträger sind demnach in Fahrzeughochrichtung im Wesentlichen übereinanderliegend angeordnet. Hierdurch kann die Querblattfeder sehr gut von den Hauptquerkräften entkoppelt werden.

Um in Fahrzeughochrichtung oberhalb des Querlenkers im Bereich zwischen seinem aufbauseitigen ersten Anlenkpunkt und seinem radträgerseitigen zweiten Anlenkpunkt zusätzlichen Bauraum zur Verfügung stellen zu können, ist es vorteilhaft, wenn der Querlenker, insbesondere in einer Fahrzeugvorderansicht konkav, gebogen ist. Zusätzlich oder alternativ kann der Querlenker aber auch in einer Fahrzeugdraufsicht eine Biegung aufweisen. Diese ist vorzugsweise derart ausgebildet, dass der Querlenker in Fahrtrichtung gebogen ist. Hierdurch kann bei Fahrzeugdraufsicht zwischen der hinteren Querblattfeder und dem vorderen Querlenker zusätzlicher Bauraum, insbesondere für einen Dämpfer, zur Verfügung gestellt werden.
Des Weiteren ist es vorteilhaft, wenn der Integrallenker mit dem Radträger und dem Lenker jeweils über ein Drehgelenk verbunden ist. Vorzugsweise sind die Drehachsen der beiden Drehgelenke zueinander parallel und/oder im Wesentlichen in Fahrzeuglängsrichtung ausgerichtet. Hierdurch kann die Radaufhängung sehr kompakt und bauraumsparend ausgebildet werden. Des Weiteren kann der Integrallenker konstruktiv einfach ausgebildet werden, da dieser ausschließlich in Fahrzeugquerrichtung auslenkbar sein muss. Hierdurch können die Herstellungskosten der Radaufhängung reduziert werden. Des Weiteren kann der Integrallenker durch eine vorstehend beschriebene Ausbildung und Orientierung vorteilhafterweise schützend im Inneren des Rades, d.h. sowohl in Radialrichtung als auch in Axialrichtung innerhalb einer Felge des Rades, angeordnet sein.
Um eine Kollision des Integrallenkers insbesondere mit dem Rad bei einer felgeninneren Anordnung vermeiden zu können, ist es vorteilhaft, wenn der Integrallenker im Neutralzustand, d. h. im ungelenkten Zustand des Rades, im Wesentlichen in Fahrzeughochrichtung ausgerichtet ist. Dies ist insbesondere dann vorteilhaft, wenn der Integrallenker schützend im Inneren des Rades positioniert ist. Zusätzlich oder alternativ ist es ferner vorteilhaft, wenn die Querblattfeder im Neutralzustand, d. h. unter Fahrzeuglast, im Wesentlichen geradlinig in Fahrzeugquerrichtung ausgerichtet ist. Hierdurch kann die Radaufhängung sehr bauraumsparend ausgebildet werden.

Erfindungsgemäß und im Hinblick auf ein gutes Eigenlenkverhalten ist der Integrallenker in Fahrzeughochrichtung unterhalb der Querblattfeder und in Fahrzeuglängsrichtung im Bereich der Querblattfeder mit dem Radträger gelenkig verbunden. Der Integrallenker und die Querblattfeder sind somit im Wesentlichen übereinanderliegend angeordnet. Der Integrallenker ist somit in Fahrzeughochrichtung zwischen dem zweiten Verbindungsbereich des Lenkers und dem darüber angeordneten Anlenkpunkt der Querblattfeder angeordnet. Hierdurch kann die Radaufhängung sehr bauraumsparend ausgebildet werden. So kann insbesondere im Bereich oberhalb der Radmitte sowie vor der Radmitte zusätzlicher Bauraum zur Verfügung gestellt werden, der für ein höheres Kofferraumladevolumen und/oder für zusätzliche Komponenten, wie beispielsweise eine Bremsanlage und/oder eine Antriebseinheit, genutzt werden kann.

Um die Gefahr einer Beschädigung der Radaufhängung durch äußere Störeinflüsse reduzieren zu können, ist es vorteilhaft, wenn der Integrallenker vollständig im Inneren der Felge des Rades angeordnet ist. Aus gleichen Gründen ist es zusätzlich oder alternativ vorteilhaft, wenn der erste Verbindungsbereich, der zweite Verbindungsbereich, der radträgerseitige Anlenkpunkt der Querblattfeder und/oder der radträgerseitige Anlenkpunkt des Querlenkers in Fahrzeugquerrichtung vollständig im Inneren der Felge des Rades angeordnet sind. Abgesehen davon, dass durch eine derartige Innenradanordnung die Gefahr einer Beschädigung der vorstehend genannten Komponenten reduziert wird, kann des Weiteren in Fahrzeugquerrichtung außerhalb der Felge zusätzlicher Bauraum gewonnen werden, der anderweitig genutzt werden kann.
Vorteilhaft ist es, wenn der Lenker, insbesondere Trapezlenker, einen Längslenkerbereich aufweist. Dieser erstreckt sich in Bezug zur Fahrtrichtung von einem ersten aufbauseitigen Gelenk ausgehend nach hinten.
Zusätzlich oder alternativ ist es ferner vorteilhaft, wenn der Lenker, insbesondere Trapezlenker, einen in Fahrtrichtung hinter der Radmitte angeordneten Querlenkerbereich aufweist. Dieser erstreckt sich vorzugsweise von einem zweiten aufbauseitigen Gelenk in Fahrzeugquerrichtung.

Der Lenker ist vorzugsweise in beiden aufbauseitigen Gelenken unmittelbar mit dem Aufbau und/oder einem Hilfsrahmen bzw. Montagerahmen verbunden. Vorteilhafterweise ist der Lenker somit zumindest teilweise als Querlenker und/oder Längslenker ausgebildet. Wenn der Querlenkerbereich vorzugsweise in Fahrzeuglängsrichtung hinter der Radmitte angeordnet ist, kann im Bereich der Radmitte genügend Bauraum für die Antriebseinheit, insbesondere Motoren, Wellen und/oder Getriebe, geschaffen werden. Mittels des Querlenkerbereiches kann ferner eine ausreichend hohe Sturzsteifigkeit sichergestellt werden. Auch können mittels des Längslenkerbereiches vorteilhafterweise auftretende Brems- und Beschleunigungsmomente abgestützt werden.

Eine gute Kraftverteilung kann sichergestellt werden, wenn der Lenker im Wesentlichen L-förmig ausgebildet ist. Hierdurch können insbesondere durch den Längslenkerbereich Radlängskräfte abgestützt werden. Vorzugsweise bildet hierbei der Querlenkerbereich den kurzen und der Längslenkerbereich den langen Schenkel der L-Form. Vorzugsweise ist der L-förmige Lenker gegenüber dem Radträger derart angeordnet, dass sein Längslenkerbereich vom Querlenkerbereich, insbesondere von dessen Ende, ausgehend im Wesentlichen in Fahrtrichtung zeigt.

In einer vorteilhaften Weiterbildung der Erfindung ist der zweite Verbindungsbereich in Fahrzeuglängsrichtung im Bereich des Querlenkerbereiches angeordnet. Der zweite Verbindungsbereich ist demnach radseitig in Fahrzeugquerrichtung im Wesentlichen im Bereich des radseitigen Endes des Querlenkerbereiches, insbesondere in dessen Verlängerung, positioniert.

Vorteilhaft ist es, wenn die Querblattfeder und der Querlenkerbereich in Fahrzeughochrichtung zueinander im Wesentlichen übereinanderliegend angeordnet sind. Hierdurch kann die Kinematik der Hinterradaufhängung verbessert werden. Zusätzlich oder alternativ ist es ferner vorteilhaft, wenn der Integrallenker in Fahrzeughochrichtung zwischen dem Querlenkerbereich und der Querblattfeder angeordnet ist.

Auch ist es vorteilhaft, wenn die Hinterradaufhängung einen Dämpfer aufweist. Dieser ist vorzugsweise in Fahrtrichtung hinter der Querblattfeder angeordnet. Zusätzlich oder alternativ ist der Dämpfer an seinem unteren Ende gelenkig mit dem Lenker, insbesondere an dem entgegen die Fahrtrichtung zeigenden Ende des Längslenkerbereiches, verbunden. Hierdurch kann vorteilhafterweise in Fahrtrichtung im Bereich vor der Querblattfeder zusätzlicher Bauraum bereitgestellt werden. Alternativ ist es ebenso auch vorteilhaft, wenn der Dämpfer in Fahrzeuglängsrichtung im Bereich zwischen der Querblattfeder und dem vor diesem angeordneten Querlenker angeordnet ist. In diesem Fall ist der Querlenker vorzugsweise in Fahrzeugdraufsicht in Fahrtrichtung bauchig gebogen.

Nachfolgend ist die Erfindung anhand von Zeichnungen näher erläutert. Es zeigen:
- Figur 1: eine perspektivische Ansicht einer Hinterradaufhängung im Bereich eines linken Hinterrades mit spurführender Querblattfeder,
- Figur 2: eine Draufsicht der Hinterradaufhängung aus Figur 1 mit gut einsehbarem in Fahrtrichtung gebogenem Querlenker,
- Figur 3: eine Vorderansicht der Hinterradaufhängung aus Figur 1 mit in Fahrzeughochrichtung konkav gebogenem Querlenker,
- Figur 4: eine zur Fahrzeugaußenseite gerichtete Seitenansicht der Hinterradaufhängung aus Figur 1 und
- Figur 5 und 6: jeweils eine perspektivische Ansicht der Hinterradaufhängung mit alternativ ausgebildeten, nämlich im Wesentlichen geradlinigen und/oder im Wesentlichen stabförmigen, Querlenkern.

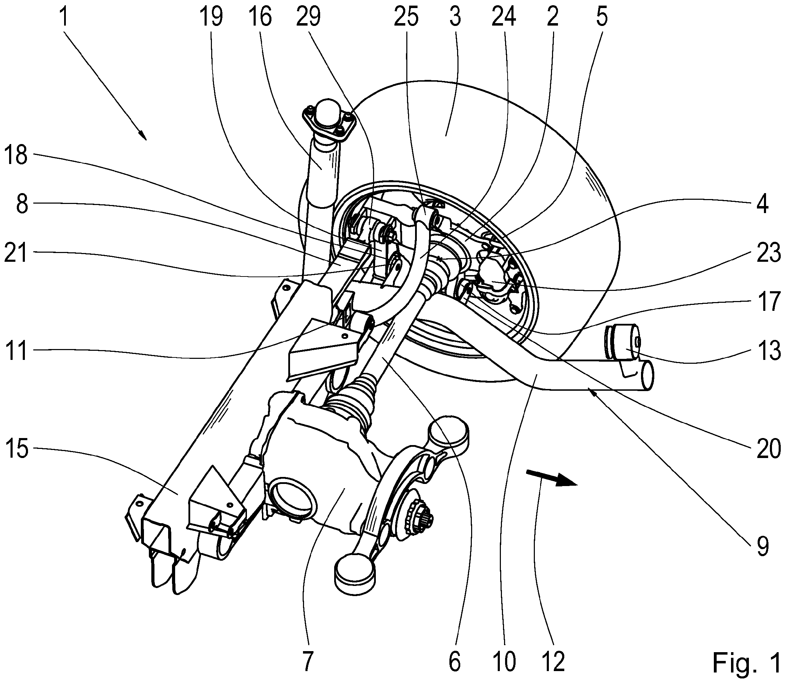

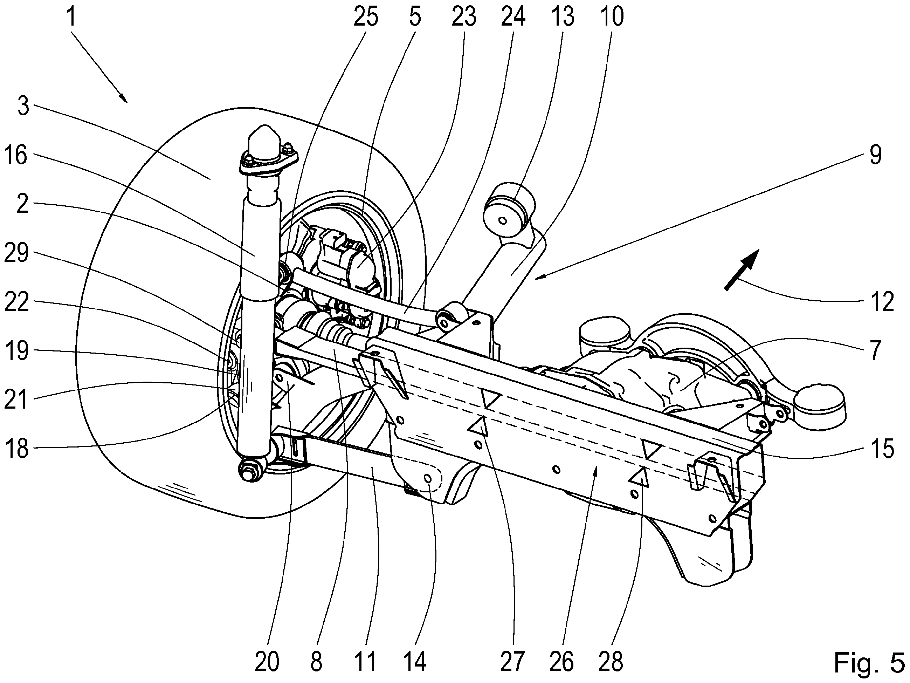

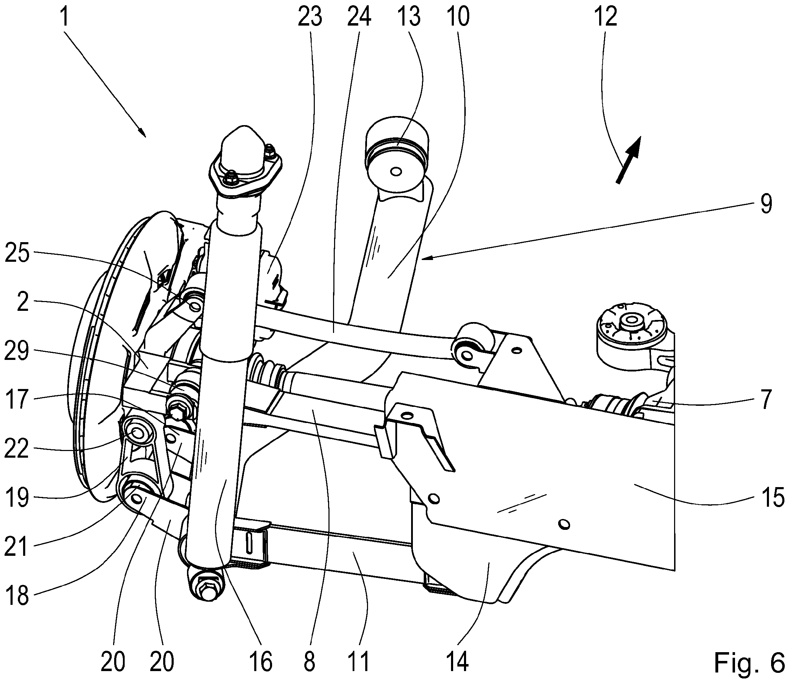

In den Figuren 1 bis 4 ist in perspektivischen sowie unterschiedlichen seitlichen Ansichten ein bevorzugtes Ausführungsbeispiel einer Hinterradaufhängung 1 gezeigt. In den Figuren 5 und 6 ist ein zweites Ausführungsbeispiel gezeigt, wobei sich dieses vom ersten Ausführungsbeispiel ausschließlich durch den Querlenker unterscheidet, der hierin geradlinig ohne Biegung ausgebildet ist. Die Darstellungen sind auf die wesentlichen Bauteile reduziert, um insbesondere die Verbindungsbereiche der Bauteile besser einsehen zu können. Des Weiteren zeigen diese im Wesentlichen eine Halbdarstellung der Hinterradachse im Bereich des linken Hinterrades.

Die in den Figuren 1 bis 4 dargestellte Hinterradaufhängung 1 weist zwei in Fahrzeugquerrichtung gegenüberliegend angeordnete Radträger 2 auf, von denen aufgrund der Halbdarstellung nur der linke dargestellt ist. Der Radträger 2 nimmt ein Rad 3 in der Radmitte 4 drehbar gelagert auf. Das Rad 3 umfasst eine Felge 5, die mit dem Radträger 2 drehbar gelagert verbunden ist. Das Rad 3 ist über eine in der Radmitte 4 angreifende Antriebswelle 6 angetrieben ausgebildet. Der Antriebsstrang umfasst ferner ein Getriebe 7, das an dem dem Radträger 2 abgewandten Ende der Antriebswelle 6 angeordnet ist. Alternativ kann das Rad 3 aber auch ebenso über einen elektrischen Radnabenmotor angetrieben sein.

Das Rad 3 bzw. der Radträger 2 ist mit einem hier nicht dargestellten Aufbau des Fahrzeugs derart gelenkig verbunden, dass das Rad 3 gegenüber dem Aufbau ein- und ausfedern kann sowie um eine Lenkachse gedreht werden kann. Die Lenkung des Rades 3 ist bei der vorliegenden Hinterradaufhängung 1 passiv ausgebildet. Dies bedeutet, dass der Lenkwinkel des Rades 3 ausschließlich über den Radhub steuerbar ist. Die Steuerung des Lenkwinkels bzw. das Lenken des Rades wird vorliegend durch eine Querblattfeder 8 bewirkt. Hierfür ist die Querblattfeder 8 derart ausgebildet sowie relativ zu den radführenden Lenkern der Hinterradaufhängung 1 derart angeordnet, dass die Querblattfeder 8 zur passiven Lenkung des Rades 3 über den Radhub als Spurlenker wirkt bzw. als solcher ausgebildet ist. Demnach übernimmt die Querblattfeder 8 in der vorliegenden Hinterradaufhängung 1 nicht nur die im Folgenden noch detailliert erläuterte Federung sowie Stabilisierung, sondern überdies hinaus auch noch die Lenkung des Rades 3. Sie vereint demnach drei Funktionen in einem einzigen Bauteil, so dass die Hinterradaufhängung 1 sehr bauraumsparend ausgebildet werden kann.

Gemäß dem vorliegenden Ausführungsbeispiel umfasst die Hinterradaufhängung 1 einen radführenden Lenker 9. Dieser ist in Bezug zur Fahrzeughochachse in einer unteren Lenkerebene angeordnet. Der Lenker 9 ist vorliegend als Trapezlenker ausgebildet. Hierfür ist dieser sowohl aufbauseitig als auch radseitig jeweils an zwei Gelenkpunkten mit dem hier nicht dargestellten Aufbau und dem Radträger 2 angelenkt.

Der Lenker 9 weist einen Quer- und einen Längslenkeranteil auf. Hierfür ist der Lenker 9 gemäß dem vorliegenden Ausführungsbeispiel im Wesentlichen L-förmig ausgebildet. Der Lenker 9 weist demnach einen Längslenkerbereich 10 und einen Querlenkerbereich 11 auf. Der Längslenkerbereich 10 erstreckt sich von einem ersten aufbauseitigen Gelenk 13 ausgehend in Bezug zur Fahrtrichtung 12 nach hinten in Richtung der Querblattfeder 8. Der Querlenkerbereich 11 erstreckt sich im Gegensatz dazu im Wesentlichen in Fahrzeugquerrichtung. Der Querlenkerbereich 11 ist in Fahrzeuglängsrichtung hinter der Radmitte 4 angeordnet. Des Weiteren ist dieser an seinem dem Längslenkerbereich 10 abgewandten Ende mit einem zweiten aufbauseitigen Gelenk 14 des Lenkers 9 aufbauseitig angelenkt. Im Gegensatz zum ersten aufbauseitigen Gelenk 13 ist der Lenker 9 in seinem zweiten Gelenk 14 nicht unmittelbar am Aufbau angelenkt, sondern mittelbar an einem Montageträger 15 bzw. Hilfsrahmen. Der Montageträger 15 kann wiederum mit dem Aufbau des Fahrzeugs verbunden werden.

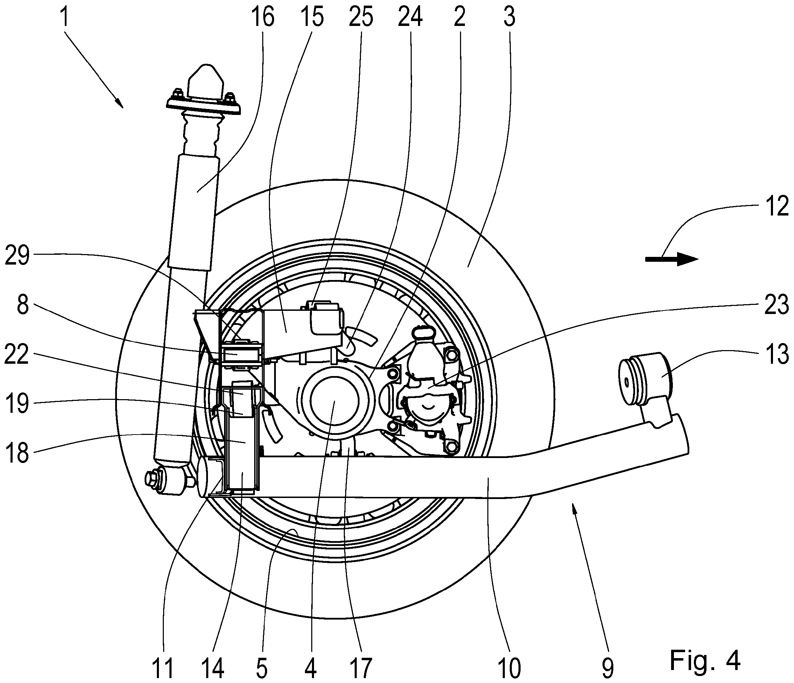

Der Lenker 9 kann gegenüber dem Aufbau um eine durch die beiden aufbauseitigen Gelenke 13, 14 verlaufende virtuelle Achse geschwenkt werden. Zum Dämpfen dieses Ein- und Ausfederns des Rades 3 umfasst die Hinterradaufhängung 1 einen Dämpfer 16. Der Dämpfer 16 ist in Fahrzeuglängsrichtung hinter der Querblattfeder 8 angeordnet. An seinem dem Lenker 9 abgewandten Ende ist der Dämpfer 16 am hier nicht dargestellten Aufbau abgestützt. An seinem dem Lenker 9 zugewandten Ende ist der Dämpfer 16 gelenkig am Lenker 9 abgestützt. Wie insbesondere in Figur 4 ersichtlich ist, ist der Dämpfer 16 mit dem Lenker 9 stirnseitig an dem dem ersten aufbauseitigen Gelenk 13 abgewandten Ende des Längslenkerbereiches 10 lösbar befestigt.

Radseitig weist der, insbesondere als Trapezlenker ausgebildete, Lenker 9 einen ersten und zweiten Verbindungsbereich 17, 18 auf. In diesen ist der Lenker 9 derart gelenkig mit dem Radträger 2 verbunden, dass dieser beim Ein- und/oder Ausfedern um die Lenkachse geschwenkt werden kann. Die Steuerung dieses Eigenlenkverhaltens erfolgt über die als Spurlenker wirkende Querblattfeder 8.
Der Radträger 2 ist im ersten Verbindungsbereich 17, insbesondere über ein Kugelgelenk, unmittelbar - d.h. ohne Zwischenschaltung eines zusätzlichen Bauteils - gelenkig mit dem Lenker 9 verbunden. Im zweiten Verbindungsbereich 18 ist der Radträger 2 im Gegensatz dazu mittelbar über einen dazwischengeschalteten Integrallenker 19 mit dem Lenker 9 gelenkig verbunden. Die beiden Verbindungsbereiche 17, 18 sind zueinander in Fahrzeuglängsrichtung beabstandet. Gemäß dem vorliegenden Ausführungsbeispiel ist der erste Verbindungsbereich 17 in Fahrzeuglängsrichtung im Bereich der Radmitte 4 angeordnet. Alternativ dazu kann der erste Verbindungsbereich 17 aber auch in Fahrtrichtung 12 betrachtet vor der Radmitte 4 ausgebildet sein. Der zweite Verbindungsbereich 18 ist in Fahrtrichtung 12 hinter der Radmitte 4 ausgebildet.
Gemäß dem vorliegenden Ausführungsbeispiel sind beide Verbindungsbereiche 17, 18 in Fahrzeugquerrichtung im Inneren der Felge 5 angeordnet. Hierfür weist der Lenker 9 Fortsätze 20 auf, an deren dem Radträger 2 zugewandten Ende das Gelenk des jeweiligen Verbindungsbereiches 17, 18 angeordnet ist. Zur Wahrung der Übersichtlichkeit ist in den vorliegenden Figuren lediglich einer dieser Fortsätze 20 mit einem Bezugszeichen versehen. Die Fortsätze 20 erstrecken sich vom Längslenkerbereich 10 des Lenkers 9 ausgehend in Fahrzeugquerrichtung in Richtung des Radträgers 2.

Ein Integrallenker 19 ist in Fahrtrichtung 12 hinter der Radmitte 4 angeordnet. Er ist mit dem Radträger 2 und dem Lenker 9 jeweils über ein Drehgelenk 21, 22 verbunden. Der Integrallenker 19 ist derart angelenkt, dass sich dieser im Wesentlichen in Fahrzeugquerrichtung bewegen kann. Hierfür sind die Drehachsen der beiden Drehgelenke 21, 22 zueinander parallel und in Fahrzeuglängsrichtung ausgerichtet. Im ungelenkten Zustand, d.h. bei Neutralstellung des Rades 3, ist der Integrallenker 19 im Wesentlichen in Fahrzeughochrichtung ausgerichtet. Die beiden Drehgelenke 21, 22 des Integrallenkers 19 sind folglich bei Neutralstellung des Rades 3 in einer Draufsicht übereinander liegend angeordnet. Des Weiteren ist der Integrallenker 19 vor äußeren Störeinflüssen geschützt vollständig im Inneren der Felge 5 positioniert.

Durch die Positionierung des zweiten Verbindungsbereichs 18 bzw. des Integrallenkers 19 in Fahrtrichtung 12 hinter der Radmitte 4 ist vorzugsweise im Bereich vor der Radmitte genügend Bauraum für andere Komponenten vorhanden. So ist in dem vorliegenden Ausführungsbeispiel in Fahrzeuglängsrichtung vor der Radmitte 4 eine Bremse 23 im Inneren der Felge 5 angeordnet.

Zum Abstützen von Querkräften weist die Hinterradaufhängung 1 des Weiteren einen Querlenker 24 auf. Der Querlenker 24 erstreckt sich in Fahrzeugquerrichtung. Radseitig ist dieser in einem Anlenkpunkt 25 gelenkig mit dem Radträger 2 verbunden. Aufbauseitig ist der Querlenker 24 in dem vorliegenden Ausführungsbeispiel unmittelbar am Montageträger 15 angelenkt. Alternativ kann der Querlenker 24 aber auch unmittelbar am Aufbau angelenkt sein.

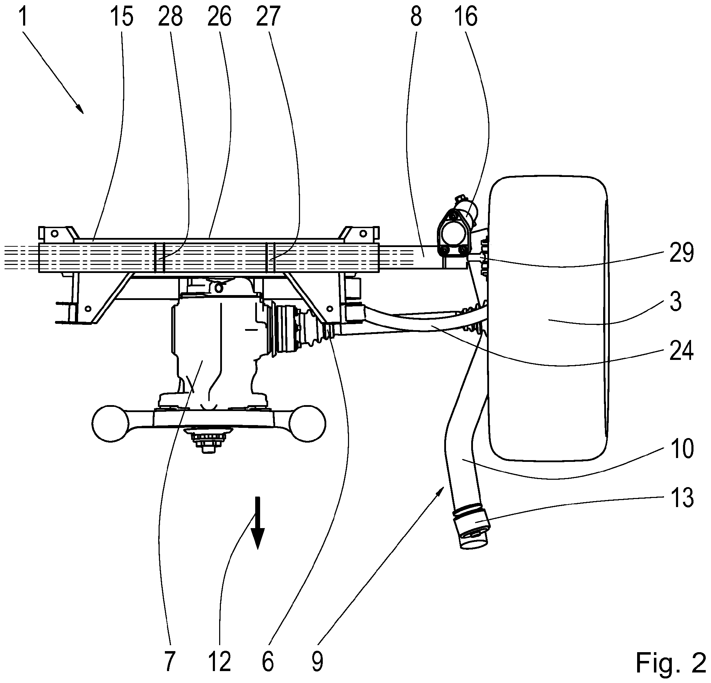

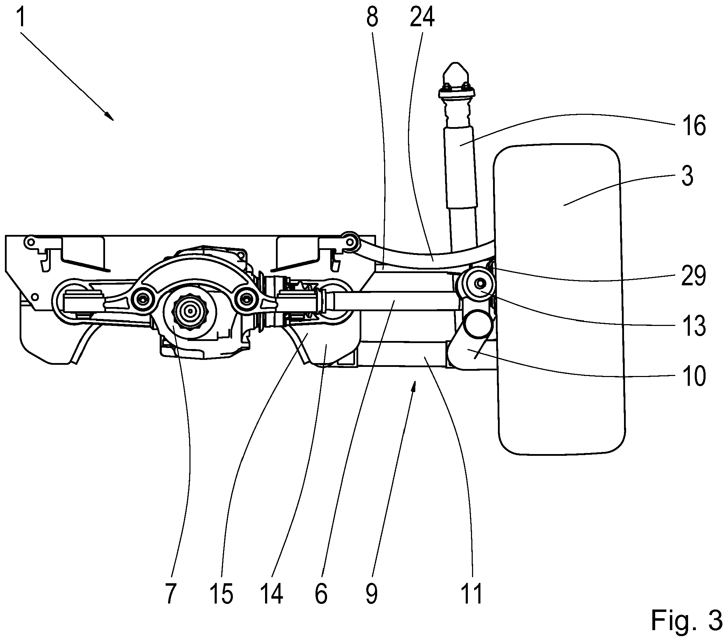

Gemäß dem in den Figuren 1 bis 4 dargestellten Ausführungsbeispiel kann der Querlenker 24 zumindest eine Biegung aufweisen. Diese ist vorliegend derart ausgebildet, dass der Querlenker 24 in einer in Figur 3 dargestellten Fahrzeugvorderansicht eine konkave Biegung aufweist. Hierdurch kann oberhalb des Querlenkers 24 zusätzlicher Bauraum geschaffen werden, der zur Erhöhung des Kofferraumvolumens oder für weitere Komponenten genutzt werden kann. Des Weiteren ist die Biegung gemäß Figur 2 in einer Fahrzeugdraufsicht derart ausgebildet, dass der Querlenker 24 in Fahrtrichtung 12 gebogen ist. Hierdurch könnte beispielsweise der Dämpfer 16 auch zwischen der Querblattfeder 8 und dem Querlenker 24 angeordnet werden.

Alternativ kann der Querlenker 24 aber auch gemäß dem in den Figuren 5 und 6 dargestellten Ausführungsbeispiel geradlinig und/oder stabförmig ausgebildet sein. In beiden Ausführungsbeispielen befindet sich der radseitige sowie aufbauseitige Anlenkpunkt des Querlenkers 24 in Fahrzeughochrichtung in der gleichen Höhe.

Der Querlenker 24 ist in Fahrzeughochrichtung oberhalb der Radmitte 4 in einer oberen Lenkerebene angeordnet. Des Weiteren befindet sich dessen radseitiger Anlenkpunkt 25 oberhalb der Radmitte 4. In Fahrzeuglängsrichtung ist der Querlenker 24, insbesondere dessen radseitiger Anlenkpunkt 25, im Bereich der Radmitte 4 positioniert. Alternativ dazu ist es ebenso auch denkbar, dass dieser in Fahrtrichtung 12 vor der Radmitte 4 angeordnet ist.

Gemäß dem vorliegenden Ausführungsbeispiel ist der Anlenkpunkt 25 des Querlenkers 24 und der erste Verbindungsbereich 17 des Lenkers 9 in Fahrzeugquerrichtung im zueinander gleichen Bereich angeordnet. Sie liegen demnach übereinander.
Die Querblattfeder 8 ist in Fahrzeughochrichtung zwischen der unteren und oberen Lenkerebene angeordnet, d.h. zwischen dem Lenker 9 und dem Querlenker 24. Des Weiteren befindet sich die Querblattfeder 8 gemäß dem vorliegenden Ausführungsbeispiel in Fahrtrichtung 12 betrachtet hinter der Radmitte 4.

Vorliegend ist die Querblattfeder 8 aus einem Faserverbundwerkstoff hergestellt, insbesondere aus Kohle-, Glas- und/oder Aramidfasern, die in einer duroplastischen und/oder thermoplastischen Matrix eingebettet sind. Hierdurch kann das Gewicht der Hinterradaufhängung 1 reduziert werden. Die Querblattfeder 8 ist verwindungssteif ausgebildet. Des Weiteren ist diese zur Federung der Hinterradaufhängung 1 in Fahrzeughochrichtung nachgiebig ausgebildet. Aufbauseitig ist die Querblattfeder hierfür über eine Zweipunktlagerung 26 mit dem Montageträger 15 verbunden (vgl. Figur 5). Die Zweipunktlagerung 26 der Querblattfeder 8 umfasst ein erstes Lager 27 und ein zweites Lager 28, so dass die beiden Enden der Querblattfeder 8 zur Federung der Hinterradaufhängung 1 um die jeweiligen Lagerpunkte schwenken können. Bei gleichmäßiger Einfederung der beiden Radträger 2 - von denen in den vorliegenden Figuren jeweils nur derjenige des linken Hinterrades dargestellt ist - nimmt die Querblattfeder 8 somit annähernd eine U-Form ein. Die Querblattfeder 8 drückt hierbei den Aufbau des Fahrzeugs über beide Lager 27, 28 in die Ruhestellung zurück. Die Querblattfeder 8 übernimmt somit die Aufgabe einer Hubfederung.

Im Falle einer Kurvenfahrt, bei der einer der beiden Radträger 2 bzw. Räder 3 stärker eingefedert wird als das andere, nimmt die Querblattfeder 8 annähernd eine S-Form an.

Auch in diesem Fall drückt die Querblattfeder 8 den Aufbau des Fahrzeugs über die beiden Lager 27, 28 in die Ruhestellung zurück. Die Querblattfeder 8 wirkt somit als Wankfederung und übernimmt folglich die Aufgabe eines Stabilisators, der bei der vorliegenden Hinterradaufhängung 1 entfallen kann. Hierdurch kann die Hinterradaufhängung 1 sehr leicht und kompakt ausgebildet werden.

Radträgerseitig ist die Querblattfeder 8 in einem Anlenkpunkt 29 gelenkig mit dem Radträger 2 verbunden. Der Anlenkpunkt 29 der Querblattfeder 8 ist in Fahrtrichtung 12 hinter der Radmitte 4 angeordnet. Des Weiteren ist der Anlenkpunkt 29 der Querblattfeder 8 in Fahrzeughochrichtung unterhalb des Querlenkers 24, insbesondere unterhalb seines Anlenkpunktes 25, angeordnet. Vorzugsweise befindet sich der Anlenkpunkt 29 der Querblattfeder 8 in Fahrzeughochrichtung auf Höhe der Radmitte 4 oder zumindest in deren Bereich. Das zweite Drehgelenk 22 des Integrallenkers 19 ist in Fahrzeughochrichtung unterhalb des Anlenkpunkts 29 der Querblattfeder 8 positioniert. Der Integrallenker 19 ist somit in Fahrzeughochrichtung zwischen dem in der unteren Lenkerebene angeordneten Lenker 9 und der darüber angeordneten Querblattfeder 8 positioniert. Des Weiteren sind die Querblattfeder 8 und der Querlenkerbereich 11 des als Trapezlenker ausgebildeten Lenkers 9 in Fahrzeuglängsrichtung im gleichen Bereich angeordnet. Der Querlenker 24 ist von diesen in Fahrtrichtung 12 beabstandet.

Aufgrund der Zweipunktlagerung 26 sowie der Flexibilität der Querblattfeder 8 wirkt diese wie vorstehend beschrieben sowohl als Federung als auch als Stabilisator der Hinterradaufhängung 1. Weil der Querlenker 24 in Fahrtrichtung 12 des Weiteren vor der Querblattfeder 8 angeordnet ist und die Querblattfeder 8 in ihrem Anlenkpunkt 29 ferner in Fahrzeughochrichtung unterhalb des Querlenkers 24 gelenkig mit dem Radträger 2 verbunden ist, wirkt die Querblattfeder 8 ferner als Spurlenker. Hierdurch kann das Rad 3 mittels der als Spurlenker wirkenden Querblattfeder 8 über den Radhub passiv gelenkt werden. Die Querblattfeder 8 ersetzt somit drei Bauteile einer gewöhnlichen Hinterradaufhängung, da sie als Federung, Stabilisator und Spurlenker ausgebildet ist. Hierdurch kann die Hinterradaufhängung 1 sehr kompakt und bauraumsparend ausgebildet werden. Des Weiteren kann die Querblattfeder 8 in Fahrzeughochrichtung näher in Richtung der unteren Lenkerebene positioniert werden, wodurch oberhalb der Querblattfeder 8 zusätzlicher Bauraum geschaffen wird.
Im vorliegenden Ausführungsbeispiel ist das im ersten Verbindungsbereich 17 angeordnete Gelenk vorzugsweise unnachgiebig ausgebildet. Im Gegensatz dazu ist das im zweiten Verbindungsbereich 18 angeordnete erste Drehgelenk 21 des Integrallenkers 19 nachgiebig, insbesondere als Gummilager, ausgebildet. Hierdurch kann zusätzlich durch die Ausnutzung der Elastokinematik die gewünschte Vorspur über den Radhub beeinflusst werden. Die Einstellung dieses Eigenlenkverhaltens wird jedoch, wie vorstehend ausgeführt, vorwiegend durch die als Spurlenker wirkende Querblattfeder 8 gesteuert.

### Bezugszeichen

1. Hinterradaufhängung
2. Radträger
3. Rad
4. Radmitte
5. Felge
6. Antriebswelle
7. Getriebe
8. Querblattfeder
9. Lenker
10. Längslenkerbereich
11. Querlenkerbereich
12. Fahrtrichtung
13. erstes aufbauseitiges Gelenk
14. zweites aufbauseitiges Gelenk
15. Montageträger
16. Dämpfer
17. erster Verbindungsbereich
18. zweiter Verbindungsbereich
19. Integrallenker
20. Fortsatz
21. erstes Drehgelenk
22. zweites Drehgelenk
23. Bremse
24. Querlenker
25. Anlenkpunkt des Querlenkers
26. Zweipunktlagerung
27. erstes Lager
28. zweites Lager
29. Anlenkpunkt der Querblattfeder

## Patentansprüche

1. Hinterradaufhängung (1) für ein Kraftfahrzeug mit einem um eine Lenkachse schwenkbaren Radträger (2) zum lenkbaren Aufnehmen eines Rades (3), einem in einer in Bezug zur Fahrzeughochachse unteren Lenkerebene angeordneten radführenden Lenker (9), der aufbauseitig gelenkig mit einem dafür vorgesehenen Aufbau verbindbar ist und radseitig gelenkig mit dem Radträger (2) verbunden ist, einem in einer oberen Lenkerebene angeordneten radführenden Querlenker (24), der aufbauseitig gelenkig mit dem dafür vorgesehenen Aufbau verbindbar ist und radseitig gelenkig mit dem Radträger (2) verbunden ist, und einer Querblattfeder (8) mit aufbauseitiger Zweipunktlagerung (26), die an ihrem dem Radträger (2) zugewandten Ende in Bezug zur Fahrtrichtung (12) hinter der Radmitte (4) gelenkig mit diesem verbunden ist, wobei der Querlenker (24) in Fahrtrichtung (12) vor der Querblattfeder (8) angeordnet ist und die Querblattfeder (8) in Fahrzeughochrichtung unterhalb des Querlenkers (24) gelenkig mit dem Radträger (2) verbunden ist, so dass die Querblattfeder (8) zur passiven Lenkung des Rades (3) über den Radhub als Spurlenker ausgebildet ist, **dadurch gekennzeichnet, dass** der Lenker (9) radseitig gelenkig in einem ersten Verbindungsbereich (17) unmittelbar und in einem zweiten Verbindungsbereich (18) mittelbar über einen Integrallenker (19) mit dem Radträger (2) verbunden ist, wobei der Integrallenker (19) in Fahrzeughochrichtung unterhalb der Querblattfeder (8) und in Fahrzeuglängsrichtung im Bereich der Querblattfeder (8) mit dem Radträger (2) gelenkig verbunden ist.

2. Hinterradaufhängung nach dem vorherigen Anspruch, **dadurch gekennzeichnet, dass** die Querblattfeder (8) in Fahrzeughochrichtung im Bereich, insbesondere auf Höhe, der Radmitte (4) gelenkig mit dem Radträger (2) verbunden ist.

3. Hinterradaufhängung nach einem der Ansprüche 1 bis 2, **dadurch gekennzeichnet, dass** der Lenker (9) als Trapezlenker ausgebildet ist.

4. Hinterradaufhängung nach Anspruch 3, **dadurch gekennzeichnet, dass** der erste Verbindungsbereich (17) in Bezug zur Fahrtrichtung (12) in oder vor der Radmitte (4) und/oder der zweite Verbindungsbereich (18) hinter dem ersten Verbindungsbereich (17) und/oder der Radmitte (4) angeordnet ist.

5. Hinterradaufhängung nach einem der Ansprüche 1 bis 4, **dadurch gekennzeichnet, dass** der Querlenker (24) in Fahrzeughochrichtung oberhalb der Radmitte (4) gelenkig mit dem Radträger (2) verbunden ist.

6. Hinterradaufhängung nach einem der Ansprüche 1 bis 5, **dadurch gekennzeichnet, dass** der Querlenker (24) in Fahrtrichtung (12) im Bereich oder vor der Radmitte (4) und/oder im Bereich des ersten Verbindungsbereiches (17) gelenkig mit dem Radträger (2) verbunden ist.

7. Hinterradaufhängung nach einem der Ansprüche 1 bis 6, **dadurch gekennzeichnet, dass** der Querlenker (24), insbesondere in einer Fahrzeugvorderansicht konkav und/oder in einer Fahrzeugdraufsicht in Fahrtrichtung, gebogen ist.

8. Hinterradaufhängung nach einem der Ansprüche 3 bis 7, **dadurch gekennzeichnet, dass** der Integrallenker (19) mit dem Radträger (2) und dem Lenker (9) jeweils über ein Drehgelenk (21, 22) verbunden ist, wobei vorzugsweise die Drehachsen der beiden Drehgelenke (21, 22) zueinander parallel und/oder in Fahrzeuglängsrichtung ausgerichtet sind.

9. Hinterradaufhängung nach einem der Ansprüche 1 bis 8, **dadurch gekennzeichnet, dass** im ungelenkten Zustand des Rades (3) der Integrallenker (19) im Wesentlichen in Fahrzeughochrichtung und/oder die Querblattfeder (8) horizontal in Fahrzeugquerrichtung ausgerichtet sind.

10. Hinterradaufhängung nach einem der Ansprüche 1 bis 9, **dadurch gekennzeichnet, dass** der Integrallenker (19), insbesondere dessen Drehgelenke (21, 22), der erste Verbindungsbereich (17), der zweite Verbindungsbereich (18), der radträgerseitige Anlenkpunkt (29) der Querblattfeder und/oder der radträgerseitige Anlenkpunkt (25) des Querlenkers in Fahrzeugquerrichtung vollständig im Inneren einer Felge (5) des Rades (3) angeordnet sind.

11. Hinterradaufhängung nach einem der Ansprüche 1 bis 11, **dadurch gekennzeichnet, dass** der Lenker (9) einen Längslenkerbereich (10) aufweist, der sich in Bezug zur Fahrtrichtung (12) von einem ersten aufbauseitigen Gelenk (13) nach hinten erstreckt, und/oder einen in Fahrtrichtung (12) hinter der Radmitte (4) angeordneten Querlenkerbereich (11) aufweist, der sich von einem zweiten aufbauseitigen Gelenk (14) in Fahrzeugquerrichtung erstreckt.

12. Hinterradaufhängung nach Anspruch 11, **dadurch gekennzeichnet, dass** der zweite Verbindungsbereich (18) in Fahrzeuglängsrichtung im Bereich des radträgerseitigen Endes des Querlenkerbereiches (11) angeordnet ist.

13. Hinterradaufhängung nach einem der Ansprüche 11 bis 12, **dadurch gekennzeichnet, dass** die Querblattfeder (8) und der Querlenkerbereich (11) im Wesentlichen übereinander liegen und/oder der Integrallenker (19) in Fahrzeughochrichtung zwischen dem Querlenkerbereich (11) und der Querblattfeder (8) angeordnet ist.

14. Hinterradaufhängung nach einem der Ansprüche 1 bis 13, **dadurch gekennzeichnet, dass** die Hinterradaufhängung (1) einen Dämpfer (16) aufweist, der in Fahrtrichtung (12) hinter der Querblattfeder (8) angeordnet ist und/oder an seinem unteren Ende gelenkig mit dem Lenker (9), insbesondere an dem entgegen die Fahrtrichtung (12) zeigenden Ende des Längslenkerbereiches (10), verbunden ist.

## Claims

1. Rear wheel suspension (1) for a motor vehicle, with a wheel carrier (2), which is pivotable about a steering axis, for steerably receiving a wheel (3), a wheel-guiding link (9) which is arranged in a lower link plane with respect to the vertical axis of the vehicle and is connectable on the body side in an articulated manner to a body provided for this purpose and is connected on the wheel side in an articulated manner to the wheel carrier (2), a wheel-guiding transverse link (24) which is arranged in an upper link plane and is connectable on the body side in an articulated manner to the body provided for this purpose and is connected on the wheel side in an articulated manner to the wheel carrier (2), and a transverse leaf spring (8) with a body-side two-point mounting (26) which, at its end facing the wheel carrier (2), is connected in an articulated manner to said wheel carrier behind the wheel centre (4) with respect to the direction of travel (12), wherein the transverse link (24) is arranged in front of the transverse leaf spring (8) in the direction of travel (12), and the transverse leaf spring (8) is connected in an articulated manner to the wheel carrier (2) below the transverse link (24) in the vertical direction of the vehicle, and therefore the transverse leaf spring (8) is configured as a toe link for the passive steering of the wheel (3) via the wheel hub, **characterized in that** the link (9) is connected on the wheel side in an articulated manner to the wheel carrier (2) directly in a first connecting region (17) and indirectly via an integral link (19) in a second connecting region (18), wherein the integral link (19) is connected in an articulated manner to the wheel carrier (2) below the transverse leaf spring (8) in the vertical direction of the vehicle and in the region of the transverse leaf spring (8) in the longitudinal direction of the vehicle.

2. Rear wheel suspension according to the preceding claim, **characterized in that** the transverse leaf spring (8) is connected in an articulated manner to the wheel carrier (2) in the vertical direction of the vehicle in the region of, in particular at the height of, the wheel centre (4).

3. Rear wheel suspension according to either of Claims 1 and 2, **characterized in that** the link (9) is designed as a trapezoidal link.

4. Rear wheel suspension according to Claim 3, **characterized in that** the first connecting region (17) is arranged with respect to the direction of travel (12) in or in front of the wheel centre (4) and/or the second connecting region (18) is arranged behind the first connecting region (17) and/or the wheel centre (4).

5. Rear wheel suspension according to one of Claims 1 to 4, **characterized in that** the transverse link (24) is connected in an articulated manner to the wheel carrier (2) above the wheel centre (4) in the vertical direction of the vehicle.

6. Rear wheel suspension according to one of Claims 1 to 5, **characterized in that** the transverse link (24) is connected in an articulated manner to the wheel carrier (2) in the direction of travel (12) in the region of or in front of the wheel centre (4) and/or in the region of the first connecting region (17).

7. Rear wheel suspension according to one of Claims 1 to 6, **characterized in that** the transverse link (24) is curved, in particular concavely in a front view of the vehicle, and/or in the direction of travel in a top view of the vehicle.

8. Rear wheel suspension according to one of Claims 3 to 7, **characterized in that** the integral link (19) is connected to the wheel carrier (2) and to the link (9) via a respective rotary joint (21, 22), wherein the axes of rotation of the two rotary joints (21, 22) are preferably oriented parallel to each other and/or in the longitudinal direction of the vehicle.

9. Rear wheel suspension according to one of Claims 1 to 8, **characterized in that**, in the non-steered state of the wheel (3), the integral link (19) is oriented substantially in the vertical direction of the vehicle and/or the transverse leaf spring (8) is oriented horizontally in the transverse direction of the vehicle.

10. Rear wheel suspension according to one of Claims 1 to 9, **characterized in that** the integral link (19), in particular the rotary joints (21, 22) thereof, the first connecting region (17), the second connecting region (18), the wheel-carrier-side coupling point (29) of the transverse leaf spring and/or the wheel-carrier-side coupling point (25) of the transverse link are completely arranged in the interior of a rim (5) of the wheel (3) in the transverse direction of the vehicle.

11. Rear wheel suspension according to one of Claims 1 to 11, **characterized in that** the link (9) has a longitudinal link region (10) which extends rearwards with respect to the direction of travel (12) from a first body-side joint (13), and/or has a transverse link region (11) which is arranged behind the wheel centre (4) in the direction of travel (12) and extends in the transverse direction of the vehicle from a second body-side joint (14).

12. Rear wheel suspension according to Claim 11, **characterized in that** the second connecting region (18) is arranged in the longitudinal direction of the vehicle in the region of the wheel-carrier-side end of the transverse link region (11).

13. Rear wheel suspension according to either of Claims 11 and 12, **characterized in that** the transverse leaf spring (8) and the transverse link region (11) essentially lie one above the other and/or the integral link (19) is arranged in the vertical direction of the vehicle between the transverse link region (11) and the transverse leaf spring (8).

14. Rear wheel suspension according to one of Claims 1 to 13, **characterized in that** the rear wheel suspension (1) has a damper (16) which is arranged behind the transverse leaf spring (8) in the direction of travel (12) and/or is connected in an articulated manner at its lower end to the link (9), in particular at that end of the longitudinal link region (10) which points counter to the direction of travel (12).

## Revendications

1. Suspension de roue arrière (1) pour un véhicule automobile, comprenant un support de roue (2) pouvant pivoter autour d'un axe de direction pour recevoir une roue (3) de manière à pouvoir la diriger, un bras oscillant (9) guidant la roue, disposé dans un plan de bras oscillant inférieur par rapport à l'axe vertical du véhicule, qui peut être connecté du côté de la carrosserie de manière articulée à une carrosserie prévue à cet effet et qui est connecté du côté de la roue de manière articulée au support de roue (2), un bras oscillant transversal (24) guidant la roue, disposé dans un plan de bras oscillant supérieur, qui peut être connecté du côté de la carrosserie de manière articulée à la carrosserie prévue à cet effet et qui est connecté du côté de la roue de manière articulée au support de roue (2) et un ressort à lame transversal (8) avec un support sur palier à deux points (26) du côté de la carrosserie, qui est connecté, au niveau de son extrémité tournée vers le support de roue (2) par rapport à la direction de conduite (12) derrière le centre de roue (4), de manière articulée à ce dernier, le bras oscillant transversal (24) étant disposé dans la direction de conduite (12) avant le ressort à lame transversal (8) et le ressort à lame transversal (8) étant connecté dans la direction verticale du véhicule en dessous du bras oscillant transversal (24) de manière articulée au support de roue (2) de telle sorte que le ressort à lame transversal (8), pour la direction passive de la roue (3) par le biais du moyeu de roue, soit réalisé sous forme de bras oscillant de guidage, **caractérisée en ce que** le bras oscillant (9) est connecté au support de roue (2) du côté de la roue de manière articulée dans une première région de connexion (17) directement et dans une deuxième région de connexion (18) de manière indirecte par le biais d'un bras oscillant intégral (19), le bras oscillant intégral (19) étant connecté de manière articulée au support de roue (2) dans la direction verticale du véhicule en dessous du ressort à lame transversal (8) et dans la direction longitudinale du véhicule dans la région du ressort à lame transversal (8).

2. Suspension de roue arrière selon la revendication précédente, **caractérisée en ce que** le ressort à lame transversal (8) est connecté de manière articulée au support de roue (2) dans la direction verticale du véhicule dans la région, en particulier à la hauteur, du centre de roue (4).

3. Suspension de roue arrière selon l'une quelconque des revendications 1 et 2, **caractérisée en ce que** le bras oscillant (9) est réalisé sous forme de bras oscillant trapézoïdal.

4. Suspension de roue arrière selon la revendication 3, **caractérisée en ce que** la première région de connexion (17) est disposée par rapport à la direction de conduite (12) dans ou avant le centre de roue (4) et/ou la deuxième région de connexion (18) est disposée derrière la première région de connexion (17) et/ou le centre de roue (4).

5. Suspension de roue arrière selon l'une quelconque des revendications 1 à 4, **caractérisée en ce que** le bras oscillant transversal (24) est connecté dans la direction verticale du véhicule au-dessus du centre de roue (4) de manière articulée au support de roue (2).

6. Suspension de roue arrière selon l'une quelconque des revendications 1 à 5, **caractérisée en ce que** le bras oscillant transversal (24) est connecté dans la direction de conduite (12) dans la région du centre de roue (4) ou avant celui-ci et/ou dans la région de la première région de connexion (17) de manière articulée au support de roue (2).

7. Suspension de roue arrière selon l'une quelconque des revendications 1 à 6, **caractérisée en ce que** le bras oscillant transversal (24), en particulier dans une vue de face du véhicule, est cintré sous forme concave et/ou dans une vue de dessus du véhicule, est cintré dans la direction de conduite.

8. Suspension de roue arrière selon l'une quelconque des revendications 3 à 7, **caractérisée en ce que** le bras oscillant intégral (19) est connecté au support de roue (2) et au bras oscillant (9) à chaque fois par le biais d'une articulation pivotante (21, 22), les axes de rotation des deux articulations pivotantes (21, 22) étant orientés de préférence parallèlement l'un à l'autre et/ou dans la direction longitudinale du véhicule.

9. Suspension de roue arrière selon l'une quelconque des revendications 1 à 8, **caractérisée en ce que** dans l'état non articulé de la roue (3), le bras oscillant intégral (19) est orienté essentiellement dans la direction verticale du véhicule et/ou le ressort à lame transversal (8) est orienté horizontalement dans la direction transversale du véhicule.

10. Suspension de roue arrière selon l'une quelconque des revendications 1 à 9, **caractérisée en ce que** le bras oscillant intégral (19), en particulier ses articulations pivotantes (21, 22), la première région de connexion (17), la deuxième région de connexion (18), le point d'articulation (29) du côté du support de roue du ressort à lame transversal et/ou le point d'articulation (25) du côté du support de roue du bras oscillant transversal, sont disposés dans la direction transversale du véhicule complètement à l'intérieur d'une jante (5) de la roue (3).

11. Suspension de roue arrière selon l'une quelconque des revendications 1 à 11, **caractérisée en ce que** le bras oscillant (9) présente une région de bras oscillant longitudinal (10) qui s'étend vers l'arrière par rapport à la direction de conduite (12) depuis une première articulation du côté de la carrosserie (13), et/ou une région de bras oscillant transversal (11) disposée dans la direction de conduite (12) derrière le centre de roue (4), qui s'étend depuis une deuxième articulation (14) du côté de la carrosserie dans la direction transversale du véhicule.

12. Suspension de roue arrière selon la revendication 11, **caractérisée en ce que** la deuxième région de connexion (18) est disposée dans la direction longitudinale du véhicule dans la région de l'extrémité du côté du support de roue de la région de bras oscillant transversal (11).

13. Suspension de roue arrière selon l'une quelconque des revendications 11 et 12, **caractérisée en ce que** le ressort à lame transversal (8) et la région de bras oscillant transversal (11) sont situés essentiellement l'un au-dessus de l'autre et/ou le bras oscillant intégral (19) est disposé dans la direction verticale du véhicule entre la région de bras oscillant transversal (11) et le ressort à lame transversal (8).

14. Suspension de roue arrière selon l'une quelconque des revendications 1 à 13, **caractérisée en ce que** la suspension de roue arrière (1) présente un amortisseur (16) qui est disposé dans la direction de conduite (12) derrière le ressort à lame transversal (8) et/ou qui est connecté au niveau de son extrémité inférieure de manière articulée au bras oscillant (9), en particulier au niveau de l'extrémité de la région de bras oscillant longitudinal (10) tournée à l'opposé de la direction de conduite (12).
